(19) Europäisches Patentamt / European Patent Office / Office européen des brevets

(11) **EP 3 260 942 B1**

(12) **EUROPEAN PATENT SPECIFICATION**

(45) Date of publication and mention
of the grant of the patent:
**22.07.2020 Bulletin 2020/30**

(51) Int Cl.:
***G05B 23/02*** *(2006.01)*  ***G21C 17/00*** *(2006.01)*
***G05B 17/02*** *(2006.01)*

(21) Application number: **16755087.0**

(22) Date of filing: **20.01.2016**

(86) International application number:
**PCT/JP2016/051542**

(87) International publication number:
**WO 2016/136337 (01.09.2016 Gazette 2016/35)**

(54) **PLANT OPERATION ASSISTANCE SYSTEM AND PLANT OPERATION ASSISTANCE METHOD**

ANLAGENBETRIEBASSISTENZSYSTEM UND ANLAGENBETRIEBASSISTENZVERFAHREN

SYSTÈME D'AIDE À L'EXPLOITATION D'INSTALLATION ET PROCÉDÉ D'AIDE À L'EXPLOITATION D'INSTALLATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.02.2015 JP 2015035664**

(43) Date of publication of application:
**27.12.2017 Bulletin 2017/52**

(73) Proprietor: **Mitsubishi Heavy Industries, Ltd.
Tokyo 108-8215 (JP)**

(72) Inventors:
• **ONO, Hitoi
Tokyo 108-8215 (JP)**

• **HANADA, Satoshi
Tokyo 108-8215 (JP)**
• **NODA, Eisuke
Tokyo 108-8215 (JP)**

(74) Representative: **Cabinet Beau de Loménie
158, rue de l'Université
75340 Paris Cedex 07 (FR)**

(56) References cited:
WO-A1-2012/013210    JP-A- 2004 240 642
JP-A- 2007 240 464    JP-A- 2015 049 726
US-A1- 2013 096 699    US-B2- 8 473 435

**Description**

Field

The present invention relates to a plant operation assistance system and a plant operation assistance method.

Background

States of plants may be monitored, for determination of current states of the plants based on the monitoring data and existing databases, such as design data, or for prediction of future states of the plants. In Patent Literature 1, an operation assistance apparatus, which uses a prediction simulator that predicts a future operation state based on monitoring data, is disclosed. In Patent Literature 2 and Patent Literature 3, estimation of parameters by use of a probability theory called "Bayes' theorem" is disclosed. Further, a technique for estimating and visualizing unobserved state quantity by using a deterministic model is disclosed in Non-Patent Literature 1.

Further, a technique for constructing a diagnostic model for a spacecraft by using a stochastic model called "Dynamic Bayesian Networks, and performing abnormality diagnosis is disclosed in Non-Patent Literature 2.

Citation List

Patent Literature

Patent Literature 1: Japanese Unexamined Patent Application Publication No. 2010-026842 A
Patent Literature 2: Japanese Unexamined Patent Application Publication No. 2003-271231 A
Patent Literature 3: Japanese Unexamined Patent Application Publication No. 2012-009064 A

US 8473435 discloses the prediction of states using a prior distribution of data that is input to physical models together with real-time data.

Non-Patent Literature

Non-Patent Literature 1: Yokogawa Technical Report, Vol. 56, No. 1 (2013)
Non-Patent Literature 2: "Spacecraft Diagnosis Method Using Dynamic Bayesian Networks", Journal of Japanese Society for Artificial Intelligence, Vol. 21, No. IF (2006)

Summary

Technical Problem

At the time of emergency, disaster, and the like in a plant, monitoring data of the plant may include much uncertainty, and prediction of a state of the plant may become difficult. In particular, in a case where a deterministic model as disclosed in Patent Literature 1 and Non-Patent Literature 1 is used, if the monitoring data include uncertainty, reliability of prediction results is reduced. When the plant is operated in reliance on these prediction results, appropriate operation of the plant becomes difficult.

The present invention aims to provide a plant operation assistance system and a plant operation assistance method, which enable prediction of a state of a plant in consideration of uncertainty in monitoring data and assistance in operation of the plant.

Solution to Problem

The present invention provides a plant operation assistance system as defined in claim 1.

According to the present invention, since the monitoring data that have been added with the probability distribution are input into the stochastic model; which part of, to what extent, and with a probability of what level, the plant is abnormal, are able to be predicted. Further, from the prediction results, the degree of uncertainty in the monitoring data and the reliability of the prediction results are able to be estimated. Accordingly, in consideration of the uncertainty in the monitoring data and the reliability of the prediction results, the plant is able to be operated.

In the present invention, it is preferable that the identifying unit is configured to derive the probability distribution for each of plural different output commands of the plant.

Thereby, states of the plant corresponding to various output commands are able to be predicted.

In the present invention, the plant operation assistance system may include an updating unit configured to generate a deterministic modal of the plant, input the state quantity and operation quantity into the deterministic modal to identify the plant parameters by fitting, and update the stochastic model with the plant parameters identified by the fitting. Thereby, even if the plant parameter is changed, the state of the plant is able to be predicted.

The present invention provides a plant operation assistance method according to claim 4.

According to the present invention, a state of a plant is able to be predicted appropriately, and the plant is able to be operated in consideration of uncertainty in monitoring data and reliability of prediction results. Advantageous Effects of Invention

According to the present invention, a plant operation assistance system and a plant operation assistance method, which enable: prediction of a state of a plant in consideration of uncertainty in monitoring data; and assistance in operation of the plant, are provided.

Brief Description of Drawings

FIG. 1 is a functional block diagram illustrating an example of a plant operation assistance system according to an embodiment.
FIG. 2 is a schematic diagram illustrating an example of a plant according to the embodiment.
FIG. 3 is a diagram for explanation of an example of probability distributions of monitoring data according to the embodiment.
FIG. 4 is a schematic diagram illustrating an example of a stochastic model according to the embodiment.
FIG. 5 is a flow chart illustrating an example of a plant operation assistance method according to the embodiment.
FIG. 6 is a diagram illustrating an example of the monitoring data according to the embodiment.
FIG. 7 is a diagram illustrating an example of the monitoring data according to the embodiment.
FIG. 8 is a diagram illustrating an example of the monitoring data according to the embodiment.
FIG. 9 is a diagram illustrating an example of the monitoring data according to the embodiment.
FIG. 10 is a diagram illustrating an example of prediction results according to the embodiment.
FIG. 11 is a diagram illustrating an example of the prediction results according to the embodiment.
FIG. 12 is a diagram illustrating an example of the prediction results according to the embodiment.
FIG. 13 is a functional block diagram illustrating another example of the plant operation assistance system according to the embodiment.

Description of Embodiments

Hereinafter, embodiments according to the present invention will be described while reference is made to the drawings, but the present invention is not limited to these embodiments. Components of the respective embodiments described below may be combined with one another, as appropriate. Further, a part of the components may be not used.

[Outline of Plant Operation Assistance System]

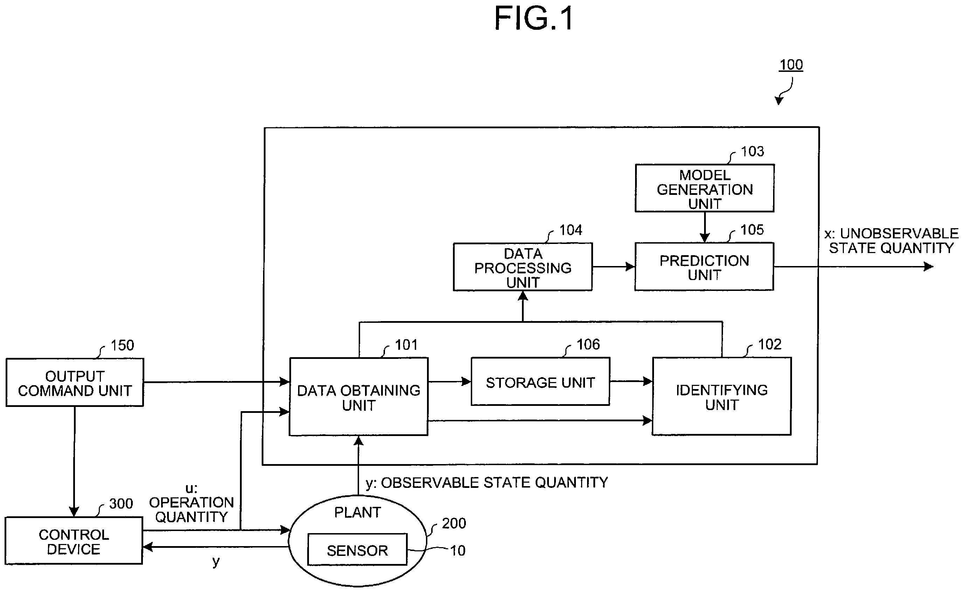

FIG. 1 is a functional block diagram illustrating an example of a plant operation assistance system 100 according to an embodiment. The plant operation assistance system 100 includes a computer system. As illustrated in FIG. 1, the plant operation assistance system 100 includes: a data obtaining unit 101 that obtains monitoring data indicating state quantity y of a plant 200, the state quantity y having been detected by a sensor 10; an identifying unit 102 that identifies, based on the state quantity y of the plant 200, a probability distribution of the monitoring data; a model generation unit 103 that generates, based on a plant parameter composed from a database including design information of the plant 200, a stochastic model of the plant 200; a data processing unit 104 that assigns the probability distribution to the monitoring data obtained by the data obtaining unit 101; a prediction unit 105 that inputs the monitoring data that have been assigned with the probability distribution, into the stochastic model, and predicts a state of the plant 200; and a storage unit 106 that stores therein data obtained by the data obtaining unit 101.

The plant 200 is controlled by a control device 300. The control device 300 includes a computer system, and outputs operation quantity u for operating the plant 200, to the plant operation assistance system 100 and the plant 200. The state quantity y detected by the sensor 10 is output to the plant operation assistance system 100 and the control device 300.

An output command unit 150 is connected to the control device 300. The output command unit 150 has an operation input unit that is operated by an operator, and generates, based on an operation, a command signal. The command signal is an output command signal instructing an output of the plant 200.

[Nuclear Power Plant]

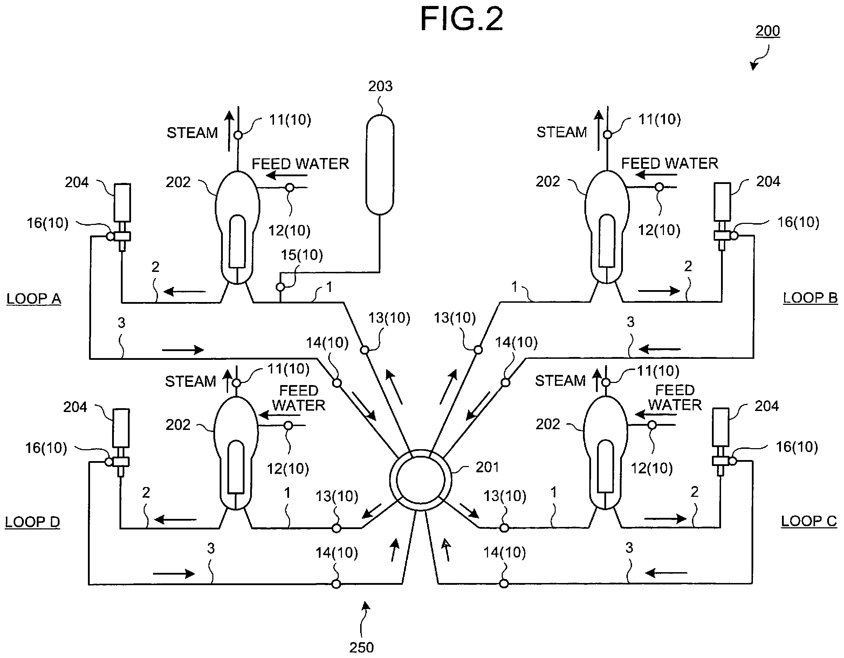

FIG. 2 is a schematic diagram illustrating an example of the plant 200 according to the embodiment. In this embodiment, an example, in which the plant 200 is a nuclear power plant 200, will be described. FIG. 2 illustrates a nuclear reactor vessel 201 and a primary cooling system 250, of the nuclear power plant 200.

The nuclear power plant 200 includes: the nuclear reactor vessel 201 having a reactor core; a steam generator 202; and a pressurizer 203 that pressurizes the primary cooling system 250. The nuclear reactor vessel 201 heats up primary cooling water. The primary cooling water that has been heated up by the nuclear reactor vessel 201 is sent to the steam generator 202 via a hot leg 1, which is a high temperature side piping. The steam generator 202 generates steam of secondary cooling water by performing heat exchange between the high temperature and high pressure primary cooling water that has been supplied from the nuclear reactor vessel 201 and the secondary cooling water (feed water) that has been supplied from a secondary cooling system. The steam generated by the steam generator 202 is supplied to a turbine generator (not illustrated) via the secondary cooling system. The primary cooling water that has been cooled in the steam generator 202 is sent to a cold leg 3, which is a low temperature side piping, via a crossover leg 2 and a primary cooling water pump 204, flows through the cold leg 3, and thereafter, is supplied to the nuclear reactor vessel 201.

In this embodiment, the primary cooling system 250 has four loops (circulation systems), which are a loop A, a loop B, a loop C, and a loop D. The primary cooling water that has been heated up by the nuclear reactor vessel 201 is supplied to each of the loops A, B, C, and D. Each of the loops A, B, C, and D has therein the steam generator 202, the primary cooling water pump 204, the hot leg 1, the crossover leg 2, and the cold leg 3. The primary cooling water that has flown through each of the loops A, B, C, and D is returned to the nuclear reactor vessel 201.

In this embodiment, examples of the state quantity y of the nuclear power plant 200, the state quantity y being observable by use of the sensor 10, include: main steam temperature $T_{ms}$ indicating temperature of the steam of the secondary cooling water generated from the steam generator 202; feed water temperature $T_{fw}$ indicating temperature of the secondary cooling water supplied to the steam generator 202; high side temperature $T_{ho}$ indicating temperature of the primary cooling water flowing through the hot leg 1; low side temperature $T_{co}$ indicating temperature of the primary cooling water flowing through the cold leg 3; pressure $P_{rcp}$ indicating pressure in the primary cooling system 250; and flow rate $G_{rcp}$ of the primary cooling water pump 204.

The sensor 10 includes: a main steam temperature sensor 11 that detects the main steam temperature $T_{ms}$; a feed water temperature sensor 12 that detects the feed water temperature $T_{fw}$; a high side temperature sensor 13 that detects the high side temperature $T_{ho}$; a low side temperature sensor 14 that detects the low side temperature $T_{co}$; a pressure sensor 15 that detects the pressure $P_{rcp}$; and a flow rate sensor 16 that detects the flow rate $G_{rcp}$.

[Identifying Unit]

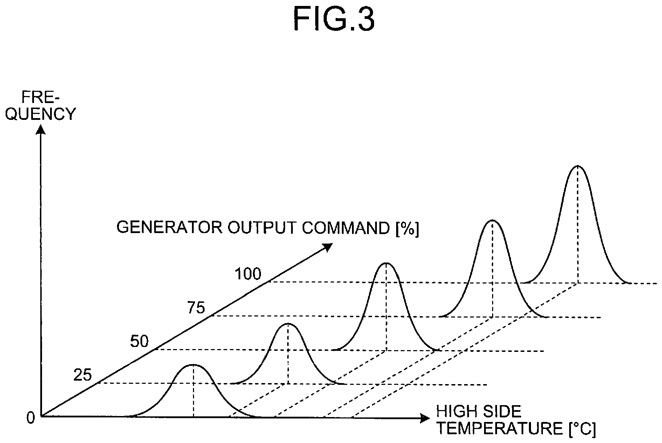

The identifying unit 102 identifies, based on the observable state quantity y of the nuclear power plant 200, a probability distribution of the monitoring data. FIG. 3 is a schematic diagram for explanation of an example of probability distributions of monitoring data. Hereinafter, description will be made by assuming that the state quantity y of the nuclear power plant 200 is the high side temperature $T_{ho}$.

The identifying unit 102 statistically derives, based on plural monitoring data (accumulated data) on the high side temperature $T_{ho}$ obtained in a predetermined past time period, a probability distribution for the high side temperature $T_{ho}$. The predetermined past time period may be, for example, any of: one day; one week; one month; one year; and so on. As the probability distribution, an average value and variance of the high side temperature $T_{ho}$ in the predetermined time period are derived.

Even if the nuclear power plant 200 is operating normally, the high side temperature $T_{ho}$ may fluctuate. In a predetermined time period when the nuclear power plant 200 is operating normally, the high side temperature sensor 13 monitors the high side temperature $T_{ho}$, and regularly outputs monitoring data on the high side temperature $T_{ho}$, to the data obtaining unit 101. The monitoring data on the high side temperature $T_{ho}$, which have been output from the high side temperature sensor 13 and obtained by the data obtaining unit 101, are accumulated in the storage unit 106. The identifying unit 102 derives, based on the plural monitoring data on the high side temperature $T_{ho}$ in the predetermined time period, the plural monitoring data having been stored in the storage unit 106, an average value and variance of the high side temperature $T_{ho}$.

In this embodiment, the identifying unit 102 identifies, with an output command of the nuclear power plant 200 being an index, the probability distribution.

The output command is a generator output command MWD. When the generator output command MWD is changed, an output range of the nuclear power plant 200 is changed, and in association with that change, the average value and variance of the high side temperature $T_{ho}$ are changed. The identifying unit 102 derives the probability distribution for the high side temperature $T_{ho}$, for each of plural different generator output commands MWDs.

Graphs illustrated in FIG. 3 illustrate relations between the high side temperature $T_{ho}$ [°C], the generator output commands MWDs [%], and frequency of obtainment of the monitoring data on the high side temperature $T_{ho}$. In the example illustrated in FIG. 3, the average value and variance of the high side temperature $T_{ho}$ at each of the generator output commands MWDs, 0[%], 25[%], 50[%], 75[%], and 100[%], as main operating points of the nuclear power plant 200, have been derived.

An average value and variance of the high side temperature $T_{ho}$ at a generator output command MWD (for example, 60[%]) other than the main operating points may be found, based on the monitoring data, by interpolation.

The identifying unit 102 is able to derive, similarly to the probability distribution of the high side temperature $T_{ho}$, as the observable state quantity y, a probability distribution for the main steam temperature $T_{ms}$, a probability distribution for the feed water temperature $T_{fw}$, a probability distribution for the low side temperature $T_{co}$, a probability distribution for the pressure $P_{rcp}$, and a probability distribution for the flow rate $G_{rcp}$. Further, the identifying unit 102 may find a probability distribution for the operation quantity u.

[Data Processing Unit]

To the data processing unit 104, a probability distribution identified by the identifying unit 102 as described by reference to FIG. 3, and monitoring data of the nuclear power plant 200 obtained by the data obtaining unit 101 are input. The data processing unit 104 assigns the probability distribution to the monitoring data, and sends the monitoring data that have been assigned with the probability distribution, to the prediction unit 105.

[Model Generation Unit]

The model generation unit 103 generates, based on plant parameters composed from a database including design information of the nuclear power plant 200, a stochastic model of the nuclear power plant 200.

The plant parameters of the nuclear power plant 200 are specification data of the nuclear power plant 200, such as design data or characteristic data of devices in the nuclear power plant 200, or physical property data of the primary cooling water. The plant parameters are static known data that are able to be known from these design data. Examples of the plant parameters include, for example: the specific heat of the primary cooling water; and masses, heat transfer coefficients, and heat exchange amounts of the devices in the nuclear power plant 200.

The model generation unit 103 generates, based on the plant parameters composed from the database including the design information, and on the monitoring data indicating the state quantity y detected by the sensor 10, a stochastic model of the nuclear power plant 200. The stochastic model is a modeling technique that uses a probability theory called "Bayes' theorem". In this embodiment, the model generation unit 103 generates the stochastic model of the nuclear power plant 200 by using a stochastic model called "Dynamic Bayesian Networks (DBNs)". DBNs is a model obtained by expansion of Bayesian Networks (BNs) so as to be also applicable to a dynamic system, and is said to be a generic state space model encompassing Kalman filter models (KFMs), hidden Markov models (HMMs), and the like.

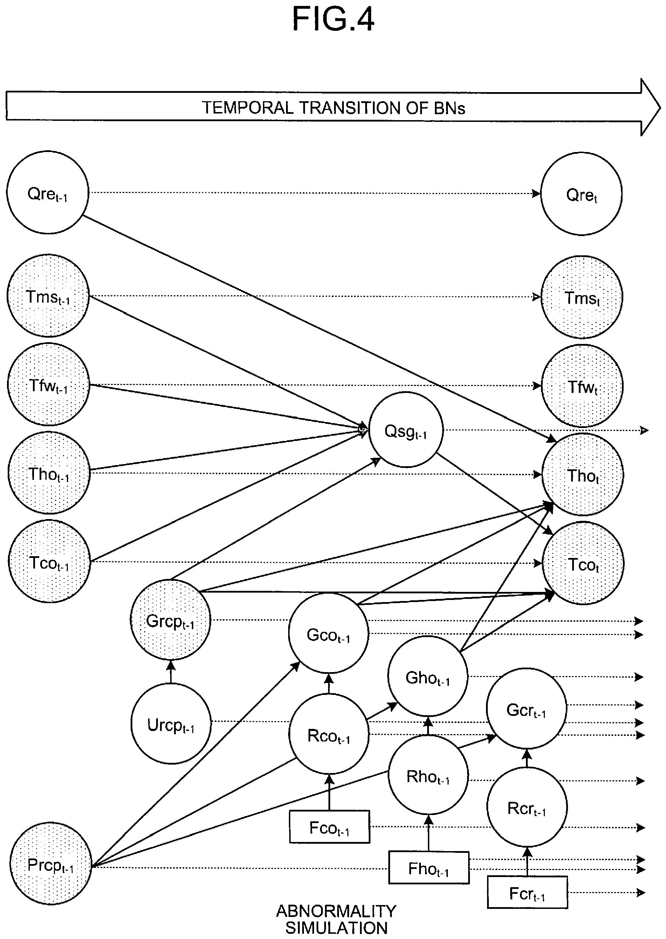

FIG. 4 is a schematic diagram illustrating an example of the stochastic model (hereinafter, referred to as a DBNs model) using Dynamic Bayesian Networks (DBNs), and illustrates a graph structure when the system of the nuclear power plant 200 is expressed by DBNs. In a DBNs model, transition distribution of each variable is expressed, and the unobservable state quantity x (hidden variable) at a time point (t-1) and a time point (t) is estimated from the observable state quantity y (variable) at the time point (t-1) and time point (t). In FIG. 4, the observable state quantity y is shaded values, and the unobservable state quantity x is unshaded values.

In this embodiment, as the unobservable state quantity x, reactor core heating value $Q_{re}$, heat exchange amount $Q_{sg}$ of the steam generator 202, flow rate $G_{ho}$ of the hot leg 1, flow rate $G_{cr}$ of the crossover leg 2; flow rate $G_{co}$ of the cold leg 3, breakage diameter $R_{ho}$ of the hot leg 1, breakage diameter $R_{cr}$ of the crossover leg 2, breakage diameter $R_{co}$ of the cold leg 3, masses $M_{sg1}$, $M_{sg2}$, $M_{sg3}$, and $M_{sg4}$ of the steam generators 202, and a mass $M_{core}$ of the reactor core are estimated.

Hereinafter, an example of the DBNs model will be described. As the observable state quantity y, the main steam temperature $T_{ms}$ of the respective loops A, B, C, and D will be denoted by $T_{ms1}$, $T_{ms2}$, $T_{ms3}$, and $T_{ms4}$, the feed water temperature $T_{fw}$ thereof by $T_{fw1}$, $T_{fw2}$, $T_{fw3}$, and $T_{fw4}$, the high side temperature $T_{ho}$ thereof by $T_{ho1}$, $T_{ho2}$, $T_{ho3}$, and $T_{ho4}$, the low side temperature $T_{co}$ thereof by $T_{co1}$, $T_{co2}$, $T_{co3}$, and $T_{co4}$, the flow rate $G_{rcp}$ thereof by $G_{rcp1}$, $G_{rcp2}$, $G_{rcp3}$, and $G_{rcp4}$, flow rate of the secondary cooling water in the loop A by $G_{fw1}$, flow rate of main steam in the loop A by $G_{ms1}$, water level in the steam generators 202 of the respective loops A, B, C, and D by $L_{sg1}$, $L_{sg2}$, $L_{sg3}$, and $L_{sg4}$, and water level in the reactor core by $L_{core}$.

5

As the design information (plant parameters), the mass of the reactor core will be denoted by $M_{core}$, the heating value thereof by $Q_{re}$, the temperature by $T_{ho}$, and the specific heat by $cp_{ho}$. Further, the masses of the steam generators 202 of the respective loops A, B, C, and D will be denoted by $M_{sg1}$, $M_{sg2}$, $M_{sg3}$, and $M_{sg4}$, the heat exchange amount $Q_{sg}$ of the steam generators 202 thereof by $Q_{sg1}$, $Q_{sg2}$, $Q_{sg3}$, and $Q_{sg4}$, the specific heat of the primary cooling water in the hot legs 1 thereof by $cp_{ho1}$, $cp_{ho2}$, $cp_{ho3}$, and $cp_{ho4}$, and the specific heat of the primary cooling water in the cold legs 3 thereof by $cp_{co1}$, $cp_{co2}$, $cp_{co3}$, and $cp_{co4}$.

As an example of the DBNs model of the nuclear power plant 200, a part of the nuclear power plant 200 is able to be expressed by the following differential equations, Equation (1) to Equation (5).

$$M_{core} \cdot cp_{ho} \frac{dT_{ho}}{dt} = G_{rcp1} \cdot cp_{co1} \cdot T_{co1} + G_{rcp2} \cdot cp_{co2} \cdot T_{co2}$$
$$+ G_{rcp3} \cdot cp_{co3} \cdot T_{co3} + G_{rcp4} \cdot cp_{co4} \cdot T_{co4} - \left(G_{rcp1} + G_{rcp2} + G_{rcp3} + G_{rcp4}\right) \quad (1)$$
$$\cdot cp_{ho} \cdot T_{ho} + Q_{re}$$

$$M_{sg1} \cdot cp_{co1} \frac{dT_{co1}}{dt} =$$
$$G_{rcp1} \cdot cp_{ho1} \cdot T_{ho1} - G_{rcp1} \cdot cp_{co1} \cdot T_{co1} - Q_{sg1} \quad (2)$$

$$M_{sg2} \cdot cp_{co2} \frac{dT_{co2}}{dt} =$$
$$G_{rcp2} \cdot cp_{ho2} \cdot T_{ho2} - G_{rcp2} \cdot cp_{co2} \cdot T_{co2} - Q_{sg2} \quad (3)$$

$$M_{sg3} \cdot cp_{co3} \frac{dT_{co3}}{dt} =$$
$$G_{rcp3} \cdot cp_{ho3} \cdot T_{ho3} - G_{rcp3} \cdot cp_{co3} \cdot T_{co3} - Q_{sg3} \quad (4)$$

$$M_{sg4} \cdot cp_{co4} \frac{dT_{co4}}{dt} =$$
$$G_{rcp4} \cdot cp_{ho4} \cdot T_{ho4} - G_{rcp4} \cdot cp_{co4} \cdot T_{co4} - Q_{sg4} \quad (5)$$

Further, as examples of the unobservable state quantity x, the heating value $Q_{re}$ of the reactor core and the heat exchange amount $Q_{sg1}$ of the steam generator 202 are able to be expressed by the following Equation (6) and Equation (7).

$$Q_{re} = f\left(MWD, T_{ho}, T_{co1}, T_{co2}, T_{co3}, T_{co4}, G_{rcp1}, G_{rcp2}, G_{rcp3}, G_{rcp4}\right) \quad (6)$$

$$Q_{sg1} = f\left(MWD, T_{ho}, T_{co1}, T_{fw1}, T_{ms1}, G_{rcp1}, G_{fw1}, G_{ms1}\right) \quad (7)$$

As expressed by Equation (6) and Equation (7), the heating value $Q_{re}$ and the heat exchange amount $Q_{sg1}$ are expressed as functions of the generator output command MWD and the like.

Further, in the DBNs model, a conditional probability Pr is assigned to all of the variables. For example, for $T_{co1,t}$, with $T_{co1,t-1}$, $T_{ho1,t-1}$, $G_{rcp1,t-1}$, and $Q_{sg1,t-1}$ being parent variables, a conditional probability like Equation (8) is assigned.

$$Pr\left(T_{col,t}\middle| T_{col,t-1},\ T_{hol,t-1},\ G_{rcpl,t-1},\ Q_{sg1,t-1}\right)$$

$$= N\left(\frac{\Delta t \cdot G_{rcpl,t-1}}{M_{sg1,t} \cdot cp_{col,t}}\left(cp_{hol,t-1} \cdot T_{hol,t-1} - cp_{col,t-1} \cdot T_{col,t-1} - Q_{sg1,t-1},\ \Sigma\right)\right) \quad (8)$$

In Equation (8), $\Sigma$ is a variance matrix of a normal distribution. In Equation (8), "$Q_{sg1,t-1}$, $\Sigma$" is a parameter that is variable according to the generator output command MWD. By the DBNs model being made variable by the generator output command MWD, the DBNs model becomes a model, in which variation differences among the monitoring data according to the generator output commands MWDs are able to be considered.

[Prediction Unit]

The monitoring data that have been assigned with the probability distribution generated by the data processing unit 104, and the DBNs model that has been generated by the model generation unit 103 are input to the prediction unit 105. The prediction unit 105 inputs the monitoring data that have been assigned with the probability distribution, into the DBNs model, and outputs the unobservable state quantity x. Since the monitoring data that have been assigned with the probability distribution are input into the DBNs model, the degree of variation in the predicted state quantity x is able to be found.

[Plant Operation Assistance Method]

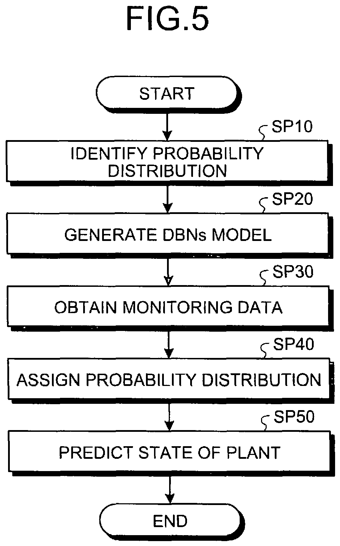

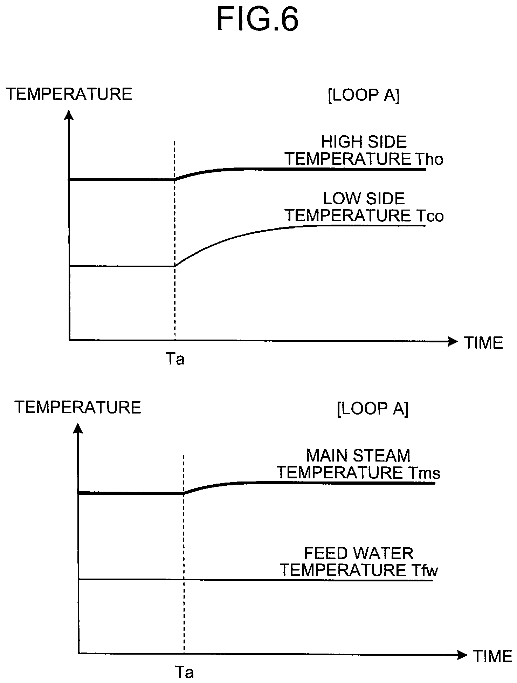

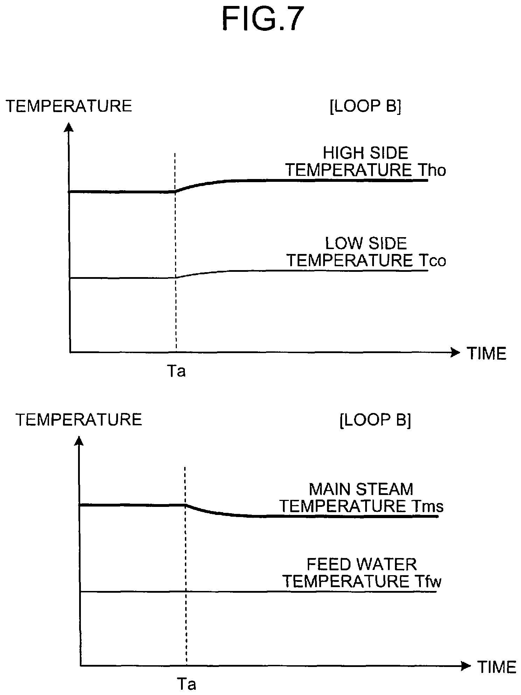

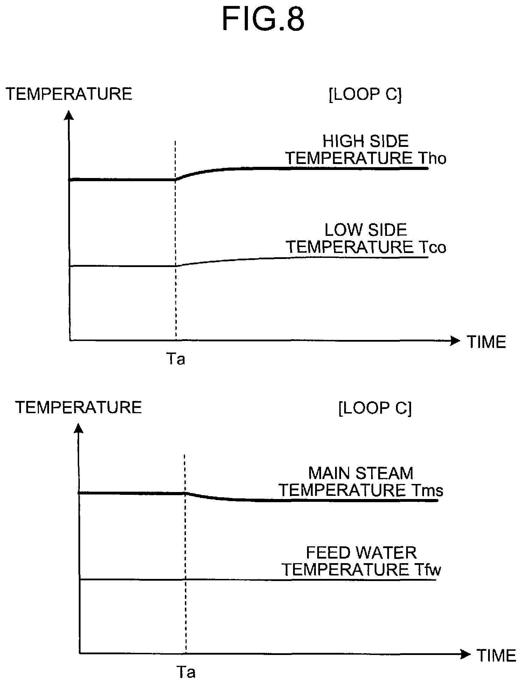

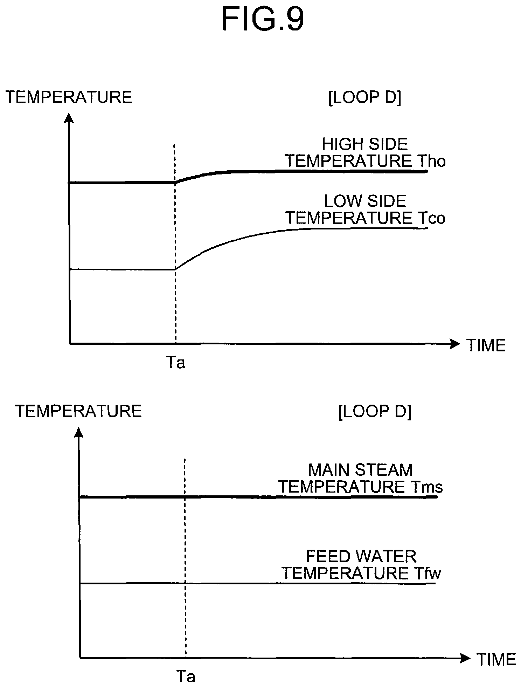

Next, an example of a plant operation assistance method according to this embodiment will be described. FIG. 5 is a flow chart illustrating the example of the plant operation assistance method according to this embodiment.
In the following description, an example, in which a loss-of-coolant accident (LOCA) occurs in the nuclear power plant 200 and in which part of the loops A, B, C, and D breakage of a piping (leg) has occurred is estimated, will be described.
Based on plural monitoring data (accumulated data) obtained by use of the sensor 10 in a predetermined past time period, a probability distribution for those monitoring data is identified (Step SP10). The identifying unit 102 identifies at least probability distributions of the high side temperature $T_{ho}$, the low side temperature $T_{co}$, the main steam temperature $T_{ms}$, and the feed water temperature $T_{fw}$, for each of the loops A, B, C, and D.
The model generation unit 103 generates a DBNs model, based on plant parameters (Step SP20).
Monitoring data for the nuclear power plant 200 are obtained (Step SP30). FIG. 6 to FIG. 9 are respectively diagrams illustrating examples of the monitoring data for the loops A, B, C, and D. As illustrated in FIG. 6 to FIG. 9, the high side temperature $T_{ho}$, the low side temperature $T_{co}$, the main steam temperature $T_{ms}$, and the feed water temperature $T_{fw}$, for each of the loops A, B, C, and D are obtained as the monitoring data. In the graphs of FIG. 6 to FIG. 9, the horizontal axes represent time and the vertical axes represent temperature.
For example, if the crossover leg 2 of the loop A is broken and a loss-of-coolant accident occurs at a time point Ta, a phenomenon, in which the pressure loss in the crossover leg 2 is reduced, the flow rate of the primary cooling water flowing through the hot leg 1 is increased, and as illustrated in FIG. 6, the high side temperature $T_{ho}$ is increased, occurs. Further, when the flow rate of the primary cooling water flowing through the hot leg 1 is increased, as illustrated in FIG. 6, a phenomenon, in which the low side temperature $T_{co}$ and the main steam temperature $T_{ms}$ are increased, occurs.
Since the primary cooling water flowing in each loop collects at the nuclear reactor vessel 201, and is thereafter supplied to each loop, the temperature in each of the loops B, C, and D also changes as illustrated in FIG. 7 to FIG. 9, due to the breakage of the crossover leg 2 of the loop A.
The data processing unit 104 assigns the probability distributions derived in Step SP10 to the monitoring data illustrated in FIG. 6 to FIG. 9 (Step SP40).
The prediction unit 105 inputs the monitoring data that have been assigned with the probability distributions into a stochastic model and predicts a state of the nuclear power plant 200 (Step SP50).

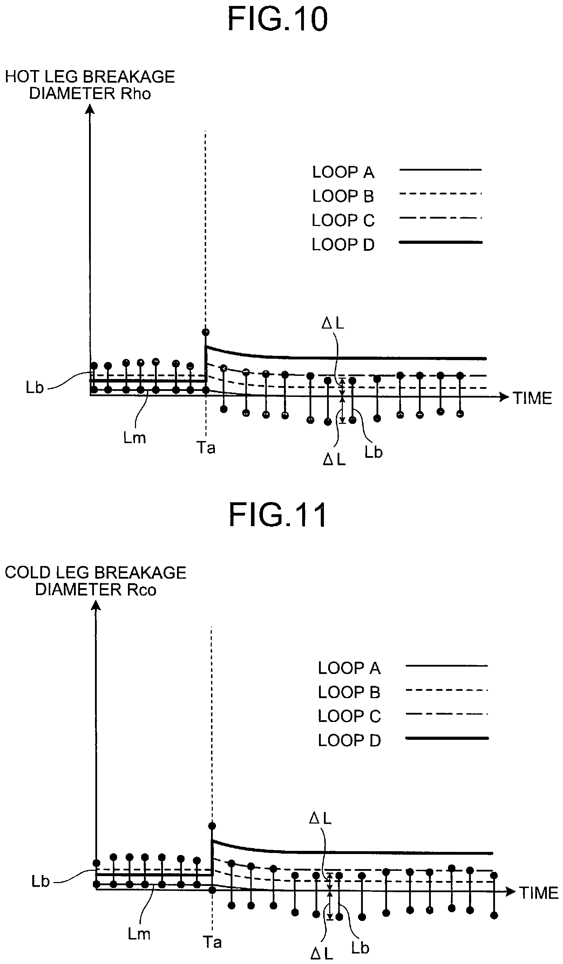

FIG. 10, FIG. 11, and FIG. 12 are diagrams illustrating relations between: the breakage diameter $R_{ho}$ of the hot leg 1, the breakage diameter $R_{co}$ of the cold leg 3, and the breakage diameter $R_{cr}$ of the crossover leg 2, as the unobservable state quantity x in the respective loops, the unobservable state quantity x having been predicted by the prediction unit 105; and time.
In each of FIG. 10 to FIG. 12, a line Lm extending horizontally indicates the central value of the predicted breakage diameter. A line Lb branching in a vertical direction from the line Lm indicates a variation (uncertainty) in the predicted breakage diameter.
As illustrated in FIG. 10 to FIG. 12, in a time period before the time point Ta, at which the loss-of-coolant accident occurs, the central values of the breakage diameters $R_{ho}$, $R_{co}$, and $R_{cr}$ of each loop are predicted to be substantially "0". It can be understood that in this time period before the time point Ta also, the lines Lb are slightly present for the breakage diameters $R_{ho}$, $R_{co}$, and $R_{cr}$ of the loop A, and uncertainty is included. This is considered to be because under normal conditions where a loss-of-coolant accident has not occurred, there is also a variation (uncertainty) in the monitoring data of each of the sensors 11, 12, 13, and 14 provided in the loop A, and the probability distribution reflecting the variation has been assigned to the monitoring data. Accordingly, since the probability distribution has been assigned to the monitoring data when the breakage diameter is predicted from the monitoring data under normal conditions also, determination of whether the prediction results indicating that the loop A has broken are highly reliable is able to be made.

In the case where the crossover leg 2 of the loop A breaks and the loss-of-coolant accident occurs at the time point Ta, the prediction unit 105 predicts the breakage diameters $R_{ho}$, $R_{co}$, and $R_{cr}$ for each loop by using the data resulting from the assignment of the probability distributions to the monitoring data in FIG. 6 to FIG. 9. Since the hot leg 1 and the cold leg 3 are not broken, as illustrated in FIG. 10 and FIG. 11, in a time period after the time point Ta, the central values of the breakage diameters $R_{ho}$ and $R_{co}$ are predicted to be substantially "0". It can be understood that in this time period after the time point Ta also, the line Lb is present for the breakage diameters $R_{ho}$ and $R_{co}$ of the loop A, and uncertainty is included. In the example illustrated in FIG. 10, when a difference between the maximum value or minimum value of the line Lb and the central value indicated by the line Lm is $\Delta L$, it is predicted that there is a possibility that breakage with the breakage diameter $R_{ho}$ of the loop A in a range of "central value $\pm \Delta L$" has occurred. As described above, with a variation (uncertainty), the breakage diameter $R_{ho}$ in the loop A is predicted. In the example illustrated in FIG. 10, the minimum value of the line Lb is less than "0". Therefore, reliability of the prediction results for the breakage diameter $R_{ho}$ of the loop A is evaluated to be low.

Further, in the example illustrated in FIG. 10 and FIG. 11, the breakage diameters $R_{ho}$ and $R_{co}$ of the loop D do not have a line Lb, but the central values thereof increase slightly. Therefrom, it is predicted that the hot leg 1 and the cold leg 3 of the loop D are likely to break, and it can be said that reliability of this prediction result is high.

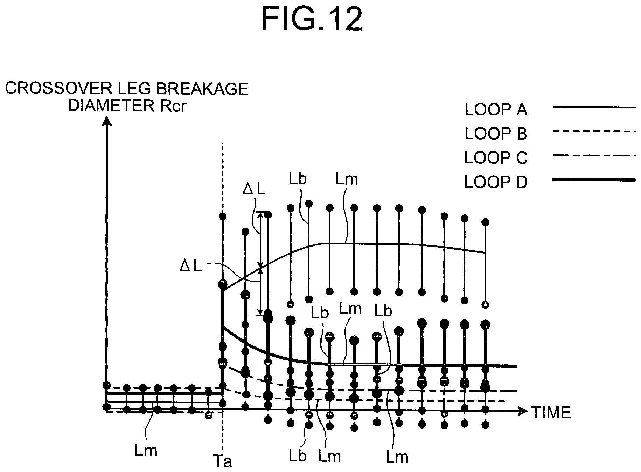

As illustrated in FIG. 12, the central value of the breakage diameter $R_{cr}$ of the loop A largely increases at the time point Ta, and it is predicted that the crossover leg 2 of the loop A has broken. It is understood that the breakage diameter $R_{cr}$ of the loop A has a line Lb with a large difference $\Delta L$ from the central value, and the prediction results have variations.

Further, in the time period after the time point Ta, the central values of the breakage diameter $R_{cr}$ of the loops B, C, and D increase, and it is predicted that the crossover legs 2 of the loops B, C, and D are likely to break. Reliability of the prediction results is able to be evaluated based on the length (difference $\Delta L$) of the line Lb for the breakage diameter $R_{cr}$ of each loop.

[Effects]

As described above, according to this embodiment, since monitoring data that have been assigned with probability distributions are input to a stochastic model (DBNs model); which part of, to what extent, and with a probability of what level, the nuclear power plant 200 is abnormal, are able to be predicted. Further, from prediction results, a degree of uncertainty in the monitoring data and reliability of the prediction results are able to be estimated. Accordingly, in consideration of the uncertainty in the monitoring data and the reliability of the prediction results, the nuclear power plant 200 is able to be operated. Furthermore, if a loss-of-coolant accident occurs, in consideration of the uncertainty in the monitoring data and the reliability of the prediction results, measures are able to be taken or decision making for the measures is able to be performed.

That is, as illustrated in FIG. 10, if a prediction result, which indicates that in the time period before the time point Ta, the breakage diameter $R_{ho}$ of the loop A includes a line Lb, is obtained, the monitoring data serving as the basis of the prediction results are able to be evaluated as including uncertainty.

Further, in the time period after the time point Ta also, if the value (length) of a line Lb is large, the reliability of the prediction results is able to be evaluated to be low. Furthermore, if the value of a line Lb before the time point Ta is small and the value of a line Lb after the time point Ta is large, it is able to be evaluated that there is a possibility that the monitoring data obtained after the time point Ta include much uncertainty.

In a conventional method, in which monitoring data not assigned with a probability distribution are input to a deterministic model; which part and how much (how many inches) of a piping is broken are able to be predicted. However, reliability of the prediction results is difficult to be evaluated.

In this embodiment, since monitoring data that have been assigned with probability distributions are input into a stochastic model, not only prediction of which part and how much (how many inches) of a piping are broken is possible, but also prediction by association between the degree of breakage and the probability (reliability) is possible, like, for example, a probability that breakage of 5 inches has occurred being found to be A% and a probability that breakage of 4 inches has occurred being found to be B%.

Further, in this embodiment, the identifying unit 102 identifies a probability distribution with a generator output command MWD of the nuclear power plant 200 being an index. Since there is a possibility that the probability distribution changes according to the generator output command MWD; with the generator output command MWD being an index, states of the nuclear power plant 200 corresponding to various generator output commands MWDs are able to be predicted.

[Other Embodiment]

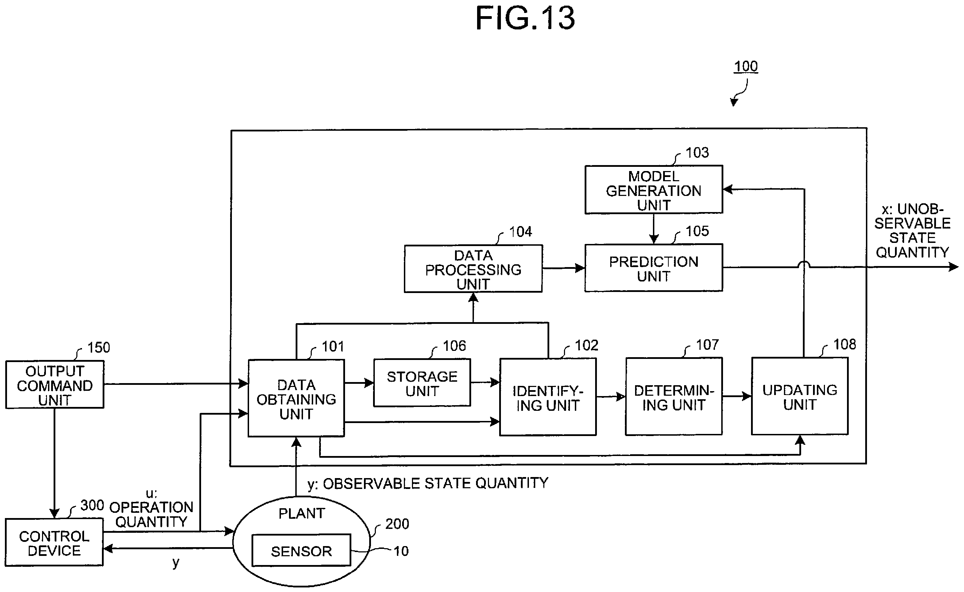

FIG. 13 is a functional block diagram illustrating another example of the plant operation assistance system 100. A characteristic point of this embodiment is in that an updating unit 108, which updates the stochastic model with plant parameters identified based on a deterministic model of the plant 200, is included.

As illustrated in FIG. 13, the plant operation assistance system 100 has a determining unit 107 and the updating unit 108. In the determining unit 107, whether or not a probability distribution (an average value and variance) is identifiable is determined. For example, in a time zone, in which the average value and variance largely deviate from actual results of design plan values and past accumulated values of the state quantity y, the determining unit 107 determines that a probability distribution is unidentifiable, and if a difference between the average value and variance, and the design plan values and past accumulated values is small, the determining unit 107 determines that a probability distribution is identifiable.

An identifiable state means a state where the average value and variance are stable, and that the plant 200 is in a steady state. If it has been determined by the determining unit 107 that a probability distribution is identifiable, that is, if it is determined that the plant 200 is in the steady state, the updating unit 108 identifies plant parameters and updates the stochastic model.

The updating unit 108 generates a deterministic model of the plant 200. Further, the state quantity y and operation quantity u of the plant 200 are input to the updating unit 108. By inputting the state quantity y and the operation quantity u into the deterministic model that has been modelled, the updating unit 108 identifies plant parameters of the plant 200 by fitting.

The plant parameters newly identified by the updating unit 108 are sent to the model generation unit 103. The model generation unit 103 updates the stochastic model with the plant parameters that have been identified based on the deterministic model of the plant 200.

Although the plant parameters are static data, the plant parameters may change. According to this embodiment, since plant parameters are identified based on a deterministic model of the plant 200, and a stochastic model is regenerated with these identified new plant parameters, a state of the plant 200 is able to be predicted appropriately even if the plant parameters are changed.

In the above described embodiment, a probability distribution is derived based on plural monitoring data (accumulated data) obtained in a predetermined past time period. If past accumulated data are not available, like when the plant 200 is newly established, a probability distribution of monitoring data may be derived based on, for example, specification data of the sensor 10.

Reference Signs List

| | |
|---|---|
| 1 | HOT LEG |
| 2 | CROSSOVER LEG |
| 3 | COLD LEG |
| 10 | SENSOR |
| 11 | MAIN STEAM TEMPERATURE SENSOR |
| 12 | FEED WATER TEMPERATURE SENSOR |
| 13 | HIGH SIDE TEMPERATURE SENSOR |
| 14 | LOW SIDE TEMPERATURE SENSOR |
| 15 | PRESSURE SENSOR |
| 16 | FLOW RATE SENSOR |
| 100 | PLANT OPERATION ASSISTANCE SYSTEM |
| 101 | DATA OBTAINING UNIT |
| 102 | IDENTIFYING UNIT |
| 103 | MODEL GENERATION UNIT |
| 104 | DATA PROCESSING UNIT |
| 105 | PREDICTION UNIT |
| 106 | STORAGE UNIT |

| 107 | DETERMINING UNIT |
| 108 | UPDATING UNIT |
| 150 | OUTPUT COMMAND UNIT |
| 200 | PLANT (NUCLEAR POWER PLANT) |
| 201 | NUCLEAR REACTOR VESSEL |
| 202 | STEAM GENERATOR |
| 203 | PRESSURIZER |
| 204 | PRIMARY COOLING WATER PUMP |
| 250 | PRIMARY COOLING SYSTEM |
| 300 | CONTROL DEVICE |
| $T_{ms}$ | MAIN STEAM TEMPERATURE |
| $T_{fw}$ | FEED WATER TEMPERATURE |
| $T_{ho}$ | HIGH SIDE TEMPERATURE |
| $T_{co}$ | LOW SIDE TEMPERATURE |
| $P_{rcp}$ | PRESSURE |
| $G_{rcp}$ | FLOW RATE |

**Claims**

1. A plant operation assistance system (100), comprising:

    a data obtaining unit (101) configured to obtain monitoring data indicating state quantity of a plant, the state quantity being detected by a sensor (10);
    an identifying unit (102) configured to statistically derive, based on accumulated data which are plural monitoring data obtained in a predetermined past time period, a probability distribution of the state quantity which includes an average value and variance of the state quantity;
    a model generation unit (103) configured to generate, based on plant parameters composed from a database including design information of the plant and the monitoring data indicating the state quantity detected by the sensor (10), a stochastic model of the plant;
    a data processing unit (104) configured to assign the probability distribution to the monitoring data obtained by the data obtaining unit (101), wherein the probability distribution comprises an average value and a variance of the state quantity corresponding to the assigned monitoring data; and
    a prediction unit (105) configured to input the monitoring data assigned with the probability distribution into the stochastic model and predict a state of the plant.

2. The plant operation assistance system (100) according to claim 1, wherein the identifying unit (102) is configured to derive the probability distribution for each of plural different state quantities of the plant.

3. The plant operation assistance system (100) according to claim 1 or claim 2, comprising an updating unit (108) configured to
generate a deterministic modal of the plant,
input the state quantity and operation quantity into the deterministic modal to identify the plant parameters by fitting, and
update the stochastic model with the plant parameters identified by the fitting.

4. A plant operation assistance method, including steps of:

    obtaining monitoring data indicating state quantity of a plant, the state quantity being detected by a sensor;
    statistically derive, based on accumulated data which are plural monitoring data obtained in a predetermined past time period, a probability distribution of the state quantity which includes an average value and variance of the state quantity;
    generating, based on plant parameters composed from a database including design information of the plant and the monitoring data indicating the state quantity detected by the sensor, a stochastic model of the plant;
    assigning the probability distribution to the obtained monitoring data, wherein the probability distribution comprises an average value and a variance of the state quantity corresponding to the assigned monitoring data; and
    inputting the monitoring data assigned with the probability distribution into the stochastic model and predicting a state of the plant.

**Patentansprüche**

1. Werksbetriebsunterstützungssystem (100), das Folgendes umfasst:

   eine Datenerhaltungseinheit (101), die dazu ausgelegt ist, Überwachungsdaten, die eine Zustandsmenge eines Werks anzeigen, zu erhalten, wobei die Zustandsmenge von einem Sensor (10) detektiert wird;
   eine Identifikationseinheit (102), die dazu ausgelegt ist, auf Basis von akkumulierten Daten, bei denen es sich um mehrere Überwachungsdaten handelt, die in einer vorbestimmten vergangenen Zeitperiode erhalten werden, eine Wahrscheinlichkeitsverteilung der Zustandsmenge, die einen Durchschnittswert und eine Varianz der Zustandsmenge beinhaltet, statistisch abzuleiten;
   eine Modellerzeugungseinheit (103), die dazu ausgelegt ist, auf Basis von Werksparametern, die aus einer Datenbank zusammengesetzt sind, die Konstruktionsinformationen des Werks und die Überwachungsdaten, die die Zustandsmenge anzeigen, die vom Sensor (10) detektiert wird, beinhaltet, ein stochastisches Modell des Werks zu erzeugen;
   eine Datenverarbeitungseinheit (104), die dazu ausgelegt ist, die Wahrscheinlichkeitsverteilung den Überwachungsdaten, die von der Datenerhaltungseinheit (101) erhalten werden, zuzuweisen, wobei die Wahrscheinlichkeitsverteilung einen Durchschnittswert und eine Varianz der Zustandsmenge, die den zugewiesenen Überwachungsdaten entspricht, umfasst; und
   eine Vorhersageeinheit (105), die dazu ausgelegt ist, die Überwachungsdaten, der die Wahrscheinlichkeitsverteilung zugewiesen ist, in das stochastische Modell einzugeben und einen Zustand des Werks vorherzusagen.

2. Werksbetriebsunterstützungssystem (100) nach Anspruch 1, wobei die Identifikationseinheit (102) dazu ausgelegt ist, die Wahrscheinlichkeitsverteilung für jede von mehreren verschiedenen Zustandsmengen des Werks abzuleiten.

3. Werksbetriebsunterstützungssystem (100) nach Anspruch 1 oder Anspruch 2, das eine Aktualisierungseinheit (108) umfasst, die zu Folgendem ausgelegt ist
   Erzeugen eines deterministischen modal des Werks,
   Eingeben der Zustandsmenge und der Betriebsmenge in das deterministische modal, um die Werksparameter durch Anpassen zu identifizieren, und
   Aktualisieren des stochastischen Modells mit den Werksparametern, die durch das Anpassen identifiziert werden.

4. Werksbetriebsunterstützungsverfahren, das die folgenden Schritte beinhaltet:

   Erhalten von Überwachungsdaten, die eine Zustandsmenge eines Werks anzeigen, wobei die Zustandsmenge von einem Sensor detektiert wird;
   statistisches Ableiten einer Wahrscheinlichkeitsverteilung der Zustandsmenge, die einen Durchschnittswert und eine Varianz der Zustandsmenge beinhaltet, auf Basis von akkumulierten Daten, bei denen es sich um mehrere Überwachungsdaten handelt, die in einer vorbestimmten vergangenen Zeitperiode erhalten werden;
   Erzeugen eines stochastisches Modells des Werks auf Basis von Werksparametern, die aus einer Datenbank zusammengesetzt sind, die Konstruktionsinformationen des Werks und die Überwachungsdaten, die die Zustandsmenge anzeigen, die vom Sensor detektiert wird, beinhaltet;
   Zuweisen der Wahrscheinlichkeitsverteilung zu den Überwachungsdaten, wobei die Wahrscheinlichkeitsverteilung einen Durchschnittswert und eine Varianz der Zustandsmenge, die den zugewiesenen Überwachungsdaten entspricht, umfasst; und
   Eingeben der Überwachungsdaten, der die Wahrscheinlichkeitsverteilung zugewiesen ist, in das stochastische Modell und Vorhersagen eines Zustands des Werks.

**Revendications**

1. Système d'aide à l'exploitation d'installation (100), comprenant :

   une unité d'obtention de données (101) configurée pour obtenir des données de surveillance indiquant une grandeur d'état d'une installation, la grandeur d'état étant détectée par un capteur (10) ;
   une unité d'identification (102) configurée pour dériver statistiquement, sur la base de données accumulées qui sont de multiples données de surveillance obtenues pendant une période temporelle passée prédéterminée, une distribution de probabilité de la grandeur d'état qui inclut une valeur moyenne et une variance de la grandeur d'état ;

une unité de génération de modèle (103) configurée pour générer, sur la base de paramètres d'installation composés à partir d'une base de données incluant des informations de conception de l'installation et des données de surveillance indiquant la grandeur d'état détectée par le capteur (10), un modèle stochastique de l'installation ;

une unité de traitement de données (104) configurée pour attribuer la distribution de probabilité aux données de surveillance obtenues par l'unité d'obtention de données (101), dans lequel la distribution de probabilité comprend une valeur moyenne et une variance de la grandeur d'état correspondant aux données de surveillance attribuées ; et

une unité de prédiction (105) configurée pour entrer les données de surveillance auxquelles, la distribution de probabilité est attribuée, dans le modèle stochastique et prédire un état de l'installation.

2. Système d'aide à l'exploitation d'installation (100) selon la revendication 1, dans lequel l'unité d'identification (102) est configurée pour dériver la distribution de probabilité pour chacune de multiples grandeurs d'état différentes de l'installation.

3. Système d'aide à l'exploitation d'installation (100) selon la revendication 1 ou la revendication 2, comprenant une unité de mise à jour (108) configurée pour

générer un modèle déterministe de l'installation,

entrer la grandeur d'état et la grandeur d'exploitation dans le modèle déterministe pour identifier les paramètres d'installation par ajustement, et

mettre à jour le modèle stochastique avec les paramètres d'installation identifiés par l'ajustement.

4. Procédé d'aide à l'exploitation d'installation, incluant les étapes de :

l'obtention de données de surveillance indiquant une grandeur d'état d'une installation, la grandeur d'état étant détectée par un capteur ;

la dérive statistique, sur la base de données accumulées qui sont de multiples données de surveillance obtenues pendant une période temporelle passée prédéterminée, d'une distribution de probabilité de la grandeur d'état qui inclut une valeur moyenne et une variance de la grandeur d'état ;

la génération, sur la base de paramètres d'installation composés à partir d'une base de données incluant des informations de conception de l'installation et des données de surveillance indiquant la grandeur d'état détectée par le capteur, d'un modèle stochastique de l'installation ;

l'attribution de la distribution de probabilité aux données de surveillance obtenues, dans lequel la distribution de probabilité comprend une valeur moyenne et une variance de la grandeur d'état correspondant aux données de surveillance attribuées ; et

l'entrée des données de surveillance, auxquelles la distribution de probabilité est attribuée, dans le modèle stochastique et la prédiction d'un état de l'installation.

# FIG.1

# FIG.2

FIG.2

200

203

STEAM  11(10)
FEED WATER
204
202
16(10)
12(10)
15(10)
LOOP A
2
1
3
13(10)
14(10)

STEAM  11(10)
FEED WATER
202  204
16(10)
12(10)
LOOP B
2
1
3
13(10)
14(10)

STEAM  11(10)
FEED WATER
204
202
16(10)
2
12(10)
1
LOOP D
3
14(10)
13(10)
201

STEAM  11(10)
FEED WATER
202
12(10)
16(10)
1
2
LOOP C
3
13(10)
14(10)

250

EP 3 260 942 B1

# FIG.3

# FIG.4

TEMPORAL TRANSITION OF BNs

ABNORMALITY
SIMULATION

# FIG.5

```
          ╭─────────────╮
          │    START    │
          ╰──────┬──────╯
                 │              ⌐ SP10
          ┌──────▼──────────────┐
          │  IDENTIFY PROBABILITY │
          │     DISTRIBUTION      │
          └──────┬───────────────┘
                 │              ⌐ SP20
          ┌──────▼───────────────┐
          │  GENERATE DBNs MODEL  │
          └──────┬───────────────┘
                 │              ⌐ SP30
          ┌──────▼───────────────┐
          │ OBTAIN MONITORING DATA│
          └──────┬───────────────┘
                 │              ⌐ SP40
          ┌──────▼────────────────────┐
          │ ASSIGN PROBABILITY DISTRIBUTION│
          └──────┬────────────────────┘
                 │              ⌐ SP50
          ┌──────▼───────────────┐
          │  PREDICT STATE OF PLANT│
          └──────┬───────────────┘
                 │
          ╭──────▼──────╮
          │     END     │
          ╰─────────────╯
```

# FIG.6

# FIG.7

# FIG.8

TEMPERATURE                                [LOOP C]

HIGH SIDE
TEMPERATURE Tho

LOW SIDE
TEMPERATURE Tco

→ TIME

Ta

TEMPERATURE                                [LOOP C]

MAIN STEAM
TEMPERATURE Tms

FEED WATER
TEMPERATURE Tfw

→ TIME

Ta

# FIG.9

TEMPERATURE [LOOP D]

HIGH SIDE
TEMPERATURE Tho

LOW SIDE
TEMPERATURE Tco

TIME

Ta

TEMPERATURE [LOOP D]

MAIN STEAM
TEMPERATURE Tms

FEED WATER
TEMPERATURE Tfw

TIME

Ta

# FIG.10

HOT LEG BREAKAGE
DIAMETER Rho

| | |
|---|---|
| LOOP A | ——— |
| LOOP B | - - - - |
| LOOP C | —·—·— |
| LOOP D | —— |

$\triangle L$

Lb

TIME

Lm

Ta

$\triangle L$  Lb

# FIG.11

COLD LEG BREAKAGE
DIAMETER Rco

| | |
|---|---|
| LOOP A | ——— |
| LOOP B | - - - - |
| LOOP C | —·—·— |
| LOOP D | —— |

$\triangle L$

Lb

TIME

Lm

Ta

$\triangle L$  Lb

# FIG.12

# FIG.13

EP 3 260 942 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010026842 A
- JP 2003271231 A
- JP 2012009064 A
- US 8473435 B

**Non-patent literature cited in the description**

- *Yokogawa Technical Report,* 2013, vol. 56 (1
- Spacecraft Diagnosis Method Using Dynamic Bayesian Networks. *Journal of Japanese Society for Artificial Intelligence,* 2006, vol. 21 (IF